Europäisches Patentamt

European Patent Office

Office européen des brevets

(19)

(11) EP 1 189 362 A1

(12) EUROPEAN PATENT APPLICATION
published in accordance with Art. 158(3) EPC

(43) Date of publication:
20.03.2002 Bulletin 2002/12

(51) Int Cl.⁷: $H04B\ 1/707$, $H04J\ 13/04$

(21) Application number: 01917500.9

(86) International application number:
PCT/JP01/02460

(22) Date of filing: 27.03.2001

(87) International publication number:
WO 01/73967 (04.10.2001 Gazette 2001/40)

(84) Designated Contracting States:
AT BE CH CY DE DK ES FI FR GB GR IE IT LI LU
MC NL PT SE TR
Designated Extension States:
AL LT LV MK RO SI

(30) Priority: 28.03.2000 JP 2000089533

(71) Applicant: MATSUSHITA ELECTRIC INDUSTRIAL
CO., LTD.
Kadoma-shi, Osaka 571-8501 (JP)

(72) Inventor: YAMANAKA, Ryutaro
Yokohama-shi, Kanagawa 233-0001 (JP)

(74) Representative: Grünecker, Kinkeldey,
Stockmair & Schwanhäusser Anwaltssozietät
Maximilianstrasse 58
80538 München (DE)

(54) COMMUNICATION APPARATUS AND COMMUNICATION METHOD

(57) Correction circuit 102 multiplies data subject to Rake combining from among data of a plurality of channels output from storage section 101 by correction coefficients and outputs the channel data to Rake section 103. Correction circuit 102 then multiplies the data of channels other than the channels subject to Rake combining by "0" and outputs the other channel data to Rake section 103. The value of the other channel data multiplied by "0" becomes "0" having no effect on the addition result of Rake combining. Rake section 103 applies a complex addition to the data output from correction circuit 102 and outputs the addition result to DSP 105.

FIG. 1

## Description

Technical Field

The present invention relates to a communication apparatus and communication method, and more particularly, to a communication apparatus and communication method ideally applicable to demodulation processing of communications based on a code division multiple access system.

Background Art

A conventional communication apparatus and communication method for correcting the phases of received signals are described in the Unexamined Japanese Patent Publication No.HEI 6-46031. The communication apparatus described in the Unexamined Japanese Patent Publication No.HEI 6-46031 corrects the phases of received signals and Rake-combines signals of a same channel including delay signals.

There is a plurality of Rake-combined channels such as a channel that transmits user-specific data and a channel shared by a plurality of users to transmit control data, etc.

A communication apparatus that demodulates signals of a plurality of these channels is described in the Unexamined Japanese Patent Publication No.HEI 11-509058. The communication apparatus described in the Unexamined Japanese Patent Publication No.HEI 6-46031 is equipped with demodulation circuits corresponding in number to simultaneously received channels to carry out demodulation.

However, the conventional apparatuses have a problem that provision of demodulation circuits corresponding in number to simultaneously received channels increases the scale of the circuit, and thereby increases the weight and costs.

Disclosure of Invention

It is an object of the present invention to provide a communication apparatus and communication method capable of decoding a plurality of channels including delay signals using decoding lines which its number is lower than that of channels within a same processing unit time.

This object can be attained when a plurality of channel signals is demodulated on a time-division basis by receiving the plurality of channel signals simultaneously, multiplying only channels to be processed by correction coefficients, inputting the channels to a demodulator and carrying out demodulation processing on the channels one by one.

Brief Description of Drawings

FIG.1 is a block diagram showing a configuration of a demodulation section of a communication apparatus according to an embodiment of the present invention;
FIG.2 illustrates an example of a symbol pattern;
FIG.3 is a timing chart for decoding two channels within a 1-process unit time;
FIG.4 illustrates set values and data flows during decoding of channel 1 according to the embodiment above;
FIG.5 illustrates set values and data flows during decoding of channel 2 according to the embodiment above;
FIG.6 is a block diagram showing a configuration of a communication terminal apparatus according to the embodiment above; and
FIG.7 is a block diagram showing a configuration of a base station apparatus according to the embodiment above.

Best Mode for Carrying out the Invention

With reference now to the attached drawings, an embodiment of the present invention will be explained in detail below.

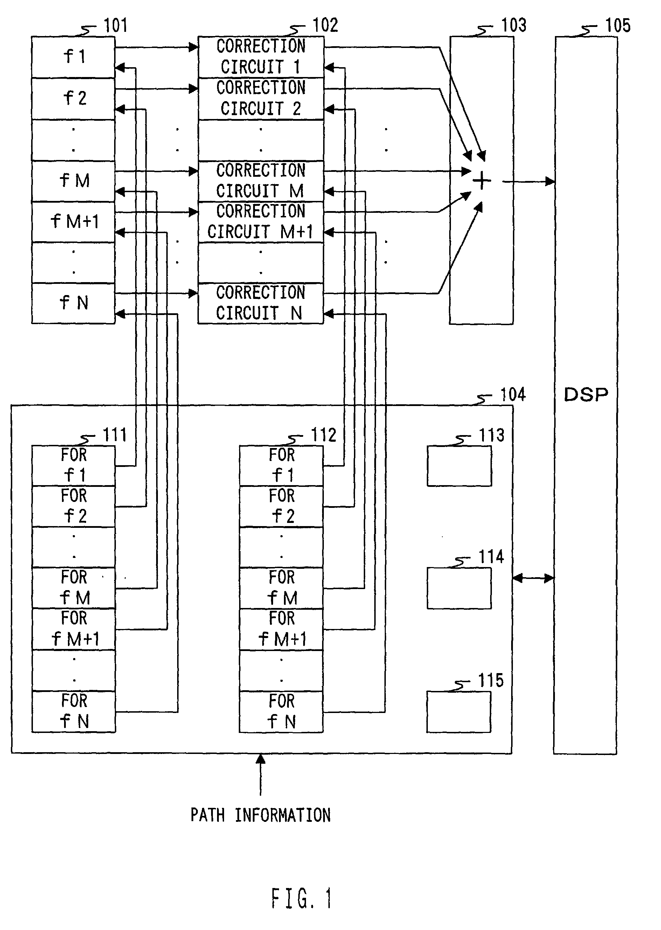

FIG.1 is a block diagram showing a configuration of a demodulation section of a communication apparatus according to an embodiment of the present invention. In FIG.1, the processor is mainly constructed of storage section 101, correction circuit 102, Rake section 103, control section 104 and DSP (Digital Signal Processor) 105. Furthermore, control section 104 is mainly constructed of storage area 111, storage area 112, storage area 113, counter 114 and storage area 115.

Storage section 101 stores input data, for example, paths of a plurality of channels and outputs data to correction circuit 102. Here, the input data consists of a plurality of paths obtained from a delay profile of a received signal.

Correction circuit 102 multiplies the data output from storage section 101 by correction coefficients output from control section 104 and outputs the multiplication result to Rake section 103. More specifically, correction circuit 102 multiplies data subject to Rake combining from among the data output from storage section 101 by correction coefficients and outputs the multiplication result to Rake section 103.

On the other hand, correction circuit 102 multiplies data of other channels which are not subject to Rake combining by "0" and outputs the multiplication result to Rake section 103. The value of the data of the other channels multiplied by "0" becomes "0" and has no effect on the addition result of Rake combining.

Rake section 103 performs a complex addition on the data output from correction circuit 102 and outputs the addition result to DSP 105.

Control section 104 instructs the address position of the data read from storage section 101. Furthermore, control section 104 calculates correction coefficients to be multiplied on the data at correction circuit 102 and outputs the correction coefficients to correction circuit 102. Here, control section 104 calculates the correction coefficients for the data to be Rake-combined based on the path information from the outside and does not calculate any correction coefficient for data not subject to Rake combining and outputs "0". Here, the path information indicates the number of valid paths detected from a delay profile, etc.

DSP 105 is fed the output signal from Rake section 103 and outputs a control signal. For example, DSP 105 writes address positions of N pieces of data read from storage section 101 to storage area 111. Furthermore, DSP 105 sets a calculation count in counter 114.

Storage area 111 stores address positions of N pieces of data read from storage section 101. Storage area 111 can also be constructed of a counter that automatically updates the reading position.

Storage area 112 stores correction coefficients to be multiplied on data.

Storage area 113 stores a flag to indicate the start of a calculation. DSP 105 can recognize the start of a calculation by reading storage area 113 and referencing the flag. It is also possible to output an interrupt signal to start a calculation to DSP 105 using this flag.

Counter 114 indicates a calculation count and performs calculations corresponding to the count of the initial setting made by DSP 105. For example, when a series of calculations is performed L times, DSP 105 sets the value of counter 114 to L and starts calculations. Thereafter, counter 114 decrements the value by "1" every time one calculation is performed. When the value of counter 114 reaches "0", DSP 105 finishes calculations.

Storage area 115 stores a flag indicating the end of calculations. By reading storage area 115 and referencing the flag, DSP 105 can recognize the end of calculations. Furthermore, it is also possible to output an interrupt signal to finish calculations to DSP 105 using this flag.

Then, correction circuit 102 will be explained in detail. Here, suppose the radio access system is a CDMA system and the modulation system is $\Pi/4$ shift QPSK modulation. This embodiment can also be implemented using other systems in the same way by adding changes as appropriate.

First, N (N: integer of 2 or greater) pieces of input data of channels to be decoded including delay signals are stored in storage section 101. Hereafter, suppose N pieces of data are f1 to fN. When two types of channel 1 and channel 2 are decoded, f1 to fM ($M \leq N$)

store channel 1 and fM+1 to fN store channel 2. With respect to each piece of data, data is stored in at least 1-process block units, and in this explanation, data is stored in L-process block units.

The data stored in storage section 101 is complex data and in the case of $\Pi/4$ shift QPSK, each piece of data can be expressed theoretically as:

$$e^{J\Theta}, \ \Theta = (2n+1)\pi/4, \ n=0, 1, 2, 3$$

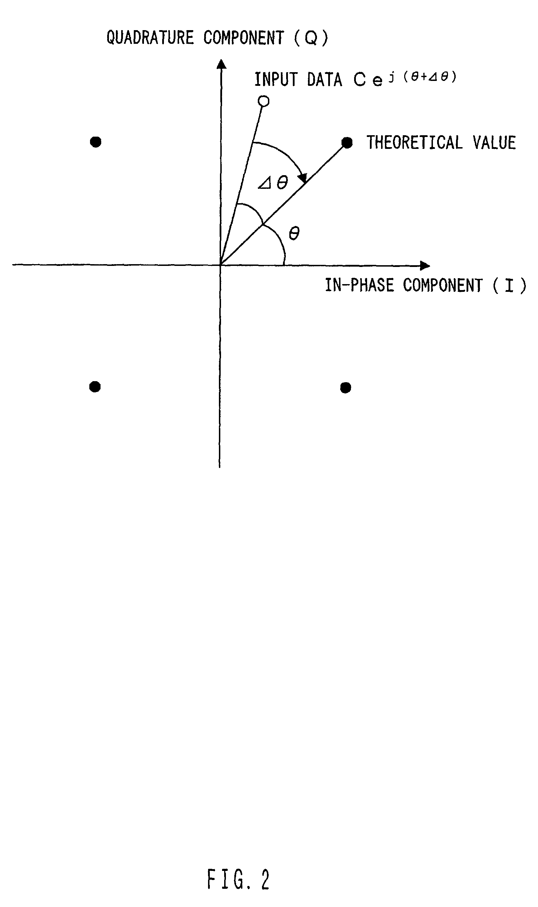

This complex data is subject to phase and amplitude variations due to fading, etc. FIG.2 illustrates an example of a symbol pattern. In FIG.2, input data 201 received by the communication apparatus is subject to phase and amplitude variations due to fading, etc. and the phase rotates by $\Delta \Theta$ from theoretical value 202 of the symbol pattern and the amplitude is multiplied C-fold as:

$$Ce^{J(\Theta+\Delta\Theta)}$$

Correction circuit 102 multiplies the data output from storage section 101 by $e^{-J\Delta\Theta}$ as expressed by expression (1) and expression (2) below.

$$Ce^{J(\Theta+\Delta\Theta)} \times e^{-J\Delta\Theta} = Ce^{J\Theta} \quad\quad (1)$$

$$\Theta = (2n+1)\pi/4$$

$$n=0, 1, 2, 3 \quad\quad (2)$$

Then, the phase shift is corrected and output to Rake section 103. This explanation only focuses on phase correction necessary to determine symbols of a phase modulation system and does not focus on the amplitude. However, in the case of a modulation system using an amplitude value to determine symbols of 16QAM, etc., it is also possible to calculate and multiply a correction value for the amplitude value.

In Rake section 103, N pieces of data subjected to phase correction are input from correction circuit 102, subjected to a complex addition and the result obtained is output to DSP 105.

N phase correction coefficients $e^{-J\Delta\Theta}$ are stored in storage area 112. A correction value is set by DSP 105. Storage area 113 stores information on the start of a series of calculations to be output to DSP 105, which is obtained by applying phase correction and then Rake combining to the input data of storage section 101. A calculation is started when DSP 105 writes a value indicating the start of a calculation to storage area 113.

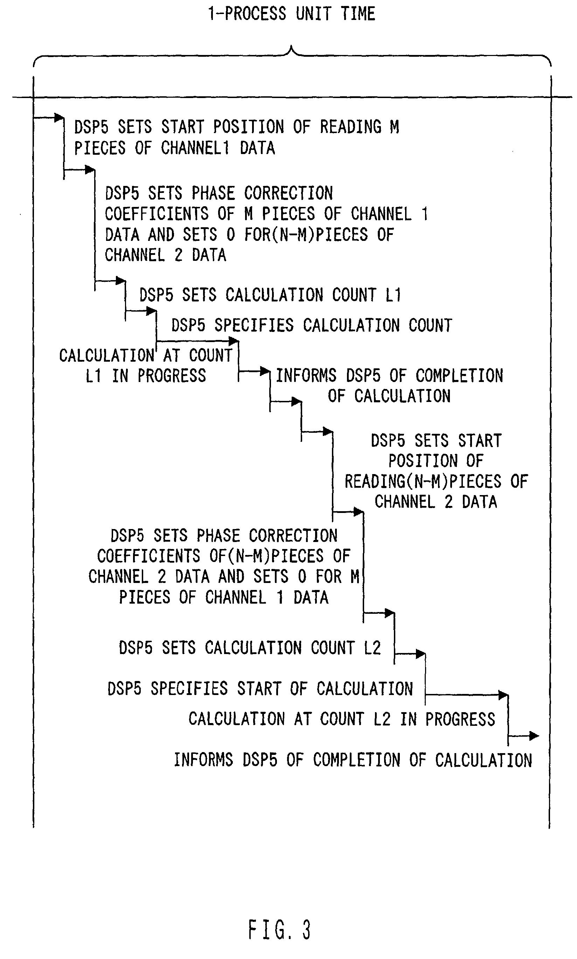

Then, an operation of the demodulation section of the communication apparatus according to this embodiment will be explained. FIG.3 shows a timing chart for decoding two channels within a 1-process unit time. To decode channel 1 first, DSP 105 sets the position to start reading of M pieces of data of channel 1 in storage area 111. For the remaining (N-M) pieces for the channel 2 data, any value can be set.

Next, DSP 105 sets M phase correction coefficients $e^{-J\Delta\Theta}$ of channel 1 in storage area 112. Then, DSP 105 sets "0" for the remaining (N-M) phase correction coefficients as the phase correction coefficients for the channel 2 data. As a result, even if the channel 2 data is input from storage section 101 to correction circuit 102, correction circuit 102 multiplies the channel 2 data by "0" and thereby the output from correction circuit 102 becomes "0", and Rake section 103 can combine only the channel 1 data as a result.

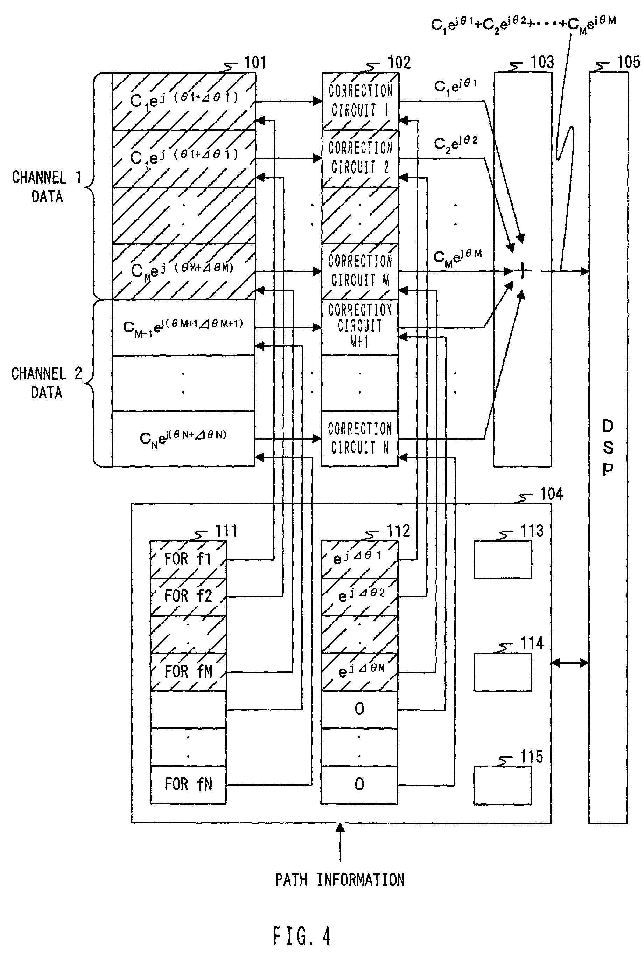

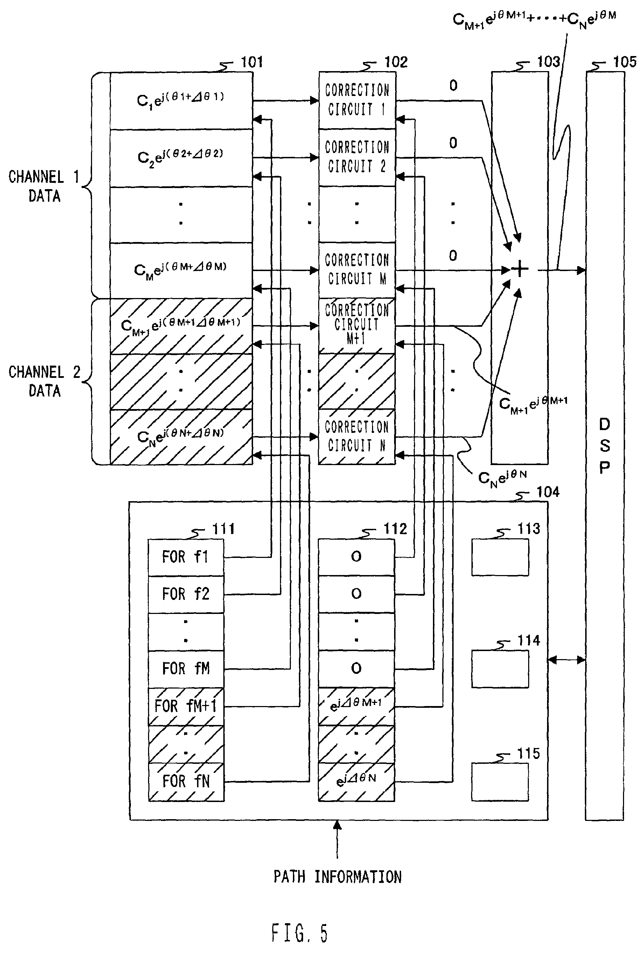

Then, DSP 105 sets calculation count L1 in counter 114, then writes a value indicating the start of a calculation to storage area 113 and starts a calculation. The set values and data flows above are shown in FIG. 4. In FIG.4, the data of storage section 101 and correction circuit 102 in the hatched area are Rake-combined.

When DSP 105 recognizes from storage area 115 that the calculation has been completed, DSP 105 then carries out a setting using the same procedure as for channel 1 and can thereby start a calculation to decode channel 2 this time.

To decode channel 2, DSP 105 sets the position of starting to read (N-M) pieces of data of channel 2 in storage area 111. Any value can be set for the remaining M pieces for the channel 1 data.

Then, DSP 105 sets (N-M) phase correction coefficients $e^{-J\Delta\Theta}$ of channel 2 in storage area 112. Then, DSP 105 sets "0" for the remaining M phase correction coefficients as the phase correction coefficients for the channel 1 data. As a result, even if the channel 1 data is input from storage section 101 to correction circuit 102, correction circuit 102 multiplies the channel 1 data by "0", and thereby the output from correction circuit 102 becomes "0" and Rake section 103 can combine only the channel 2 data as a result.

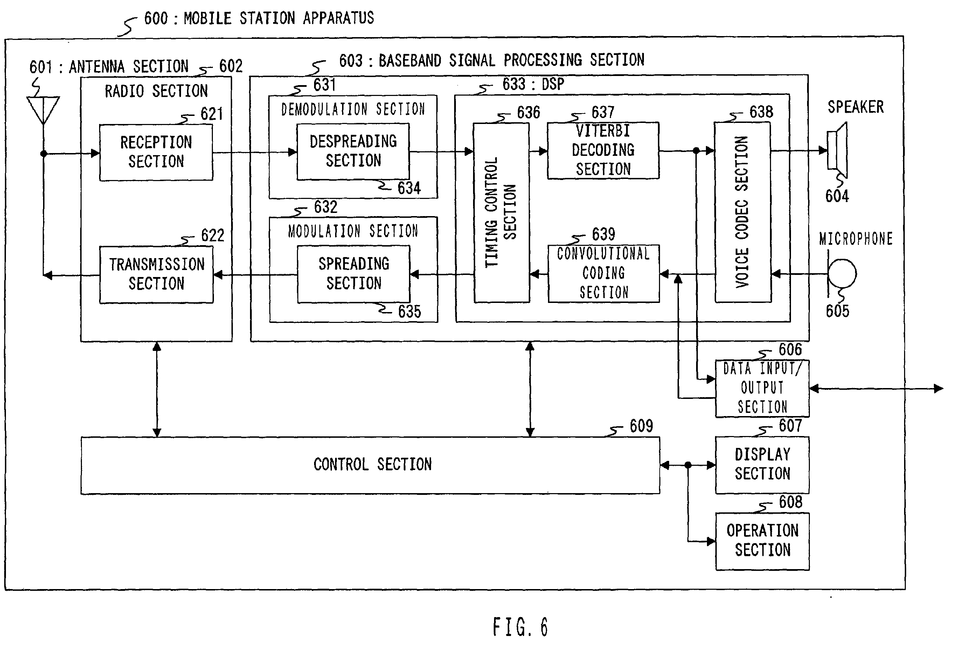

The set values and data flows during decoding of channel 2 are shown in FIG.5. In FIG.5, the data of storage section 101 and correction circuit 102 in the hatched area are Rake-combined.

As shown above, the communication apparatus of this embodiment receives signals of a plurality of channels simultaneously, multiplies correction coefficients only on channels to be processed, inputs the channel signals to a demodulator and carries out demodulation processing on the channels one by one, and can thereby demodulate a plurality of channels including delay signals with decoding lines which its number is lower than that of channels within a same processing unit time.

As shown above, using one decoding line for decoding of signals of a plurality of channels on a time-division basis makes it possible to reduce the number of transistors integrated on a chip. The explanations so far assume that the number of channels to be decoded is 2, but this embodiment can also be implemented in the same way for cases where the number of channels to be decoded is more than 2 by applying changes as appropriate. Moreover, when the number of channels to be decoded is 1, it is only necessary to set M=N.

Furthermore, the explanations above describe the case where Rake section 103 conducts a simple addition assuming that the data of the channels other than those to be decoded is "0" in correction circuit 102, but this embodiment can be implemented in the same way even if storage area 111 and storage area 112 of control section 104 are specified so that Rake section 103 does not combine data of channels other than those to be decoded.

Furthermore, the communication apparatus of this embodiment can also be built in a communication terminal apparatus. FIG.6 is a block diagram showing a configuration of a communication terminal apparatus according to this embodiment.

In FIG.6, communication terminal apparatus 600 is mainly constructed of antenna section 601, radio section 602, baseband signal processing section 603, speaker 604, microphone 605, data input/output section 606, display section 607, operation section 608 and control section 609.

Radio section 602 is mainly constructed of reception section 621 and transmission section 622. Baseband signal processing section 603 is mainly constructed of demodulation section 631, modulation section 632 and DSP 633. Demodulation section 631 is provided with despreading section 634. Modulation section 632 is provided with spreading section 635.

DSP 633 is constructed of the above-described DSP and is mainly constructed of timing control section 636, Viterbi decoding section 637, voice CODEC section 638 and convolutional coding section 639.

Antenna section 601 outputs a received radio signal to reception section 621 as a received signal and sends a signal output from transmission section 622. Reception section 621 applies radio processing to the received signal and outputs to despreading section 634.

Despreading section 634 is constructed of the above-described demodulation section and despreads the received signal and outputs to timing control section 636. Timing control section 636 measures transmission/reception timings, outputs the received signal from despreading section 634 to Viterbi decoding section 637 and outputs the transmission signal from convolutional coding section 639 to spreading section 635.

Viterbi decoding section 637 decodes the received signal and outputs to voice CODEC section 638. Voice CODEC section 638 applies voice decoding to the received signal, outputs a voice signal to speaker 604, carries out voice coding on a voice signal output from the microphone and outputs to convolutional coding section 639.

Speaker 604 outputs the voice signal as voice. Microphone 605 receives voice and outputs the voice to voice CODEC section 638 as a voice signal. Convolutional coding section 639 carries out convolutional coding on the signal subjected to voice coding by voice CODEC section 638 and outputs to timing control section 636 as a transmission signal.

Spreading section 635 spreads the transmission signal output from timing control section 636 and outputs to transmission section 622. Transmission section 622 applies radio processing to the transmission signal and sends via antenna section 601.

Data input/output section 606 exchanges data with an external apparatus, outputs the data to be sent to convolutional coding section 639 and receives the received data from Viterbi decoding section 637 and outputs to an external device.

Control section 609 receives an instruction for operation of the communication terminal apparatus from operation section 608 and outputs information on the operating situation, etc. to display section 607. Control section 609 instructs radio section 602 and baseband signal processing section 603 to originate a call or accept a call under instructions from operation section 608.

Display section 607 displays information on the operation situation, etc. output from control section 609. Operation section 608 receives inputs for operations necessary for communications of the communication terminal apparatus and outputs the information input to control section 609.

As shown above, the communication terminal apparatus of this embodiment receives signals of a plurality of channels simultaneously, multiplies correction coefficients only on channels to be processed and inputs the channel signals to the demodulator, carries out demodulation processing on the channels one by one, and can thereby demodulate a plurality of channels including delay signals with decoding lines which its number is lower than that of channels within a same processing unit time.

In the communication terminal apparatus in FIG.6, demodulation section 631, modulation section 632 and DSP 633 are separated from one another, but the communication terminal apparatus can also be constructed with software that integrates demodulation section 631, modulation section 632 and DSP 633 into a single DSP.

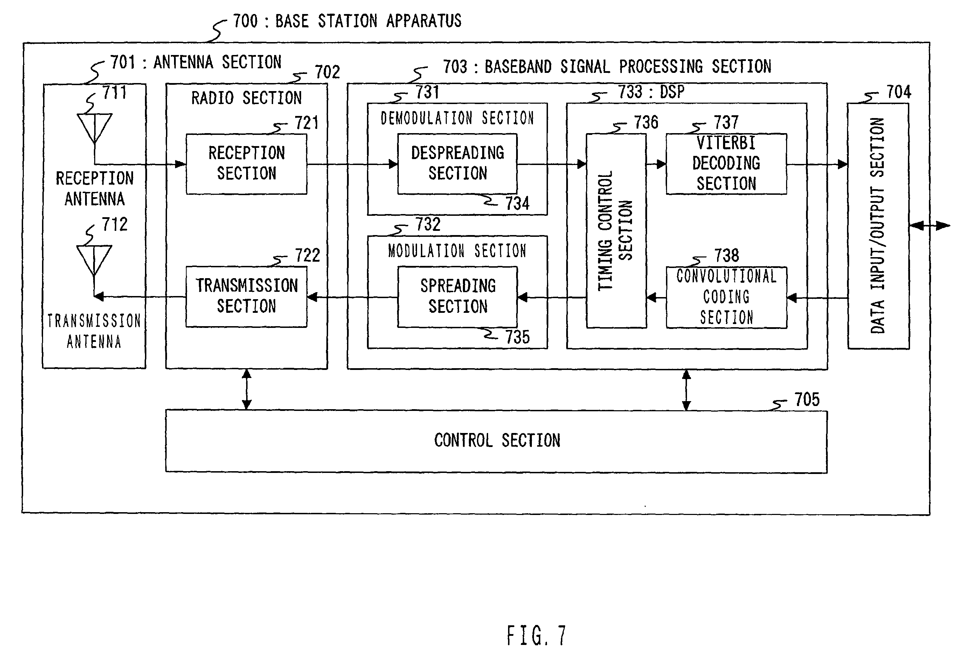

Furthermore, the communication apparatus of this embodiment can also be incorporated in a base station apparatus. FIG.7 is a block diagram showing a configuration of a base station apparatus according to this embodiment.

In FIG.7, base station apparatus 700 is mainly constructed of antenna section 701, radio section 702, baseband signal processing section 703, data input/output section 704 and control section 705.

Antenna section 701 is mainly constructed of reception antenna 711 and transmission antenna 712. Radio section 702 is mainly constructed of reception section 721 and transmission section 722. On the other hand, baseband signal processing section 703 is mainly constructed of demodulation section 731, modulation section 732 and DSP 733. Demodulation section 731 is provided with despreading section 734, while modulation section 732 is provided with spreading section 735.

DSP 733 is constructed of the above-described DSP and is mainly constructed of timing control section 736, Viterbi decoding section 737 and convolutional coding section 739.

Reception antenna 711 outputs a received radio signal to reception section 721 as a received signal and sends a signal output from transmission section 722. Reception section 721 applies radio processing to the received signal and outputs to despreading section 734. Despreading section 734 is constructed of the above-described demodulation section and despreads the received signal and outputs to timing control section 736.

Timing control section 736 measures transmission/reception timings, outputs the received signal from despreading section 734 to Viterbi decoding section 737 and outputs the transmission signal from convolutional coding section 738 to spreading section 735. Viterbi decoding section 737 decodes the received signal and outputs to data input/output section 704.

Data input/output section 704 exchanges data with an external apparatus, outputs the data to be sent to convolutional coding section 738 as the transmission signal and receives the received data from Viterbi decoding section 737 and outputs to an external device.

Convolutional coding section 738 carries out convolutional coding on the transmission signal and outputs to timing control section 736. Spreading section 735 spreads the transmission signal output from timing control section 736 and outputs to transmission section 722. Transmission section 722 applies radio processing to the transmission signal and sends via transmission antenna 712.

Control section 705 instructs radio section 702 and baseband signal processing section 703 to carry out a transmission operation and reception operation.

As shown above, the base station apparatus of this embodiment receives signals of a plurality of channels simultaneously, multiplies correction coefficients only on channels to be processed and inputs the channel signals to the demodulator, carries out demodulation processing on the channels one by one, and can thereby demodulate a plurality of channels including delay signals with decoding lines which its number is lower than that of channels within a same processing unit time.

In the base station apparatus in FIG.7, demodulation section 731, modulation section 732 and DSP 733 are separated from one another, but the base station apparatus can also be constructed with software that integrates demodulation section 731, modulation section 732 and DSP 733 into a single DSP.

Furthermore, the communication apparatus of this embodiment assumes a CDMA system as the radio access system and Π/4 shift QPSK modulation as the modulation system, but this embodiment is not limited to this and can also be implemented in the same way using other modulation systems by applying changes as appropriate. Furthermore, as correction coefficients, not only phase correction but also amplitude correction can be applied.

Furthermore, the communication method according to the embodiment above has described a communication apparatus, but this communication method can also be implemented by software. For example, it is possible to store the program for executing the above communication method in a ROM (Read Only Memory) beforehand and allow a CPU (Central Processor Unit) to operate the program.

It is also possible to store a program to execute the above-described communication method in a computer-readable storage medium, record the program stored in the storage medium in a RAM (Random Access Memory) of a computer and operate the computer according to the program. In these cases, the same actions and effects as in the case of the above embodiment can be obtained.

As is apparent from the above explanations, the communication apparatus and communication method of the present invention can demodulate a plurality of channels including delay signals with decoding lines which its number is lower than that of channels within a same processing unit time.

This application is based on the Japanese Patent Application No.2000-089533 filed on March 28, 2000, entire content of which is expressly incorporated by reference herein.

**Claims**

1. A communication apparatus comprising:

   controlling means for generating correction coefficients;
   correcting means for multiplying data of a plurality of channels by said correction coefficients; and
   combining means for combining the data multiplied by said correction coefficients, wherein said controlling means generates correction coefficients corresponding to only one channel to be processed.

2. The communication apparatus according to claim 1, wherein controlling means generates correction coefficients corresponding to a path selected for demodulation of a received signal from a delay profile.

3. The communication apparatus according to claim 1, wherein controlling means generates and outputs correction coefficients corresponding to one channel to be processed and outputs "0" as correction coefficients corresponding to the remaining channels.

4. The communication apparatus according to claim 1, further comprising storing means for storing data of a plurality of channels, wherein correcting means multiplies the data stored in said storing means by correction coefficients.

5. The communication apparatus according to claim 1, wherein controlling means generates correction coefficients to correct phase shifts and the combining means Rake-combines the data multiplied by correction coefficients.

6. The communication apparatus according to claim 1, wherein controlling means generates correction coefficients to correct amplitude shifts and combining means Rake-combines the data multiplied by correction coefficients.

7. A base station apparatus equipped with a communication apparatus, said communication apparatus comprising:

   controlling means for generating correction coefficients;
   correcting means for multiplying data of a plurality of channels by said correction coefficients; and
   combining means for combining the data multiplied by said correction coefficients.

8. A communication terminal apparatus equipped with a communication apparatus, said communication apparatus comprising:

   controlling means for generating correction coefficients;
   correcting means for multiplying data of a plurality of channels by said correction coefficients; and
   combining means for combining the data multiplied by said correction coefficients.

9. A computer-readable recording medium that records a communication program, comprising:

   a step of generating correction coefficients corresponding to only one channel to be processed;
   a step of multiplying data of a plurality of channels input by said correction coefficients; and
   a step of combining the data multiplied by said correction coefficients.

10. A communication method comprising the steps of:

generating correction coefficients corresponding to only one channel to be processed; multiplying data of a plurality of channels input by said correction coefficients; and combining the data multiplied by said correction coefficients.

FIG. 1

QUADRATURE COMPONENT (Q)

INPUT DATA $C e^{j(\theta + \Delta\theta)}$

THEORETICAL VALUE

$\Delta\theta$

$\theta$

IN-PHASE COMPONENT ( I )

FIG. 2

1-PROCESS UNIT TIME

DSP5 SETS START POSITION OF READING M
PIECES OF CHANNEL1 DATA

DSP5 SETS PHASE CORRECTION
COEFFICIENTS OF M PIECES OF CHANNEL 1
DATA AND SETS 0 FOR(N-M)PIECES OF
CHANNEL 2 DATA

DSP5 SETS CALCULATION COUNT L1

DSP5 SPECIFIES CALCULATION COUNT

CALCULATION AT COUNT
L1 IN PROGRESS

INFORMS DSP5 OF COMPLETION
OF CALCULATION

DSP5 SETS START
POSITION OF
READING(N-M)PIECES OF
CHANNEL 2 DATA

DSP5 SETS PHASE CORRECTION
COEFFICIENTS OF(N-M)PIECES OF
CHANNEL 2 DATA AND SETS 0 FOR M
PIECES OF CHANNEL 1 DATA

DSP5 SETS CALCULATION COUNT L2

DSP5 SPECIFIES START OF CALCULATION

CALCULATION AT COUNT L2 IN PROGRESS

INFORMS DSP5 OF COMPLETION OF CALCULATION

FIG. 3

FIG. 4

$$C_{M+1}e^{j\theta M+1}+\cdots+C_N e^{j\theta M}$$

FIG. 5

EP 1 189 362 A1

600 : MOBILE STATION APPARATUS

601 : ANTENNA SECTION — 602    603 : BASEBAND SIGNAL PROCESSING SECTION

RADIO SECTION

621 RECEPTION SECTION

631 DEMODULATION SECTION
634 DESPREADING SECTION

633 : DSP

636 TIMING CONTROL SECTION

637 VITERBI DECODING SECTION

638 VOICE CODEC SECTION

SPEAKER
604

622 TRANSMISSION SECTION

632 MODULATION SECTION
635 SPREADING SECTION

639 CONVOLUTIONAL CODING SECTION

MICROPHONE
605

606 DATA INPUT/ OUTPUT SECTION

609 CONTROL SECTION

607 DISPLAY SECTION

608 OPERATION SECTION

FIG. 6

FIG. 7

EP 1 189 362 A1

## INTERNATIONAL SEARCH REPORT

| International application No. |
|---|
| PCT/JP01/02460 |

**A. CLASSIFICATION OF SUBJECT MATTER**
Int.Cl$^7$  H04B1/707, H04J13/04

According to International Patent Classification (IPC) or to both national classification and IPC

**B. FIELDS SEARCHED**

Minimum documentation searched (classification system followed by classification symbols)
Int.Cl$^7$  H04B1/69-1/713, H04J13/00-13/06

Documentation searched other than minimum documentation to the extent that such documents are included in the fields searched
Jitsuyo Shinan Koho          1926-1996    Toroku Jitsuyo Shinan Koho  1994-2001
Kokai Jitsuyo Shinan Koho    1971-2001    Jitsuyo Shinan Toroku Koho  1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 11-261440, A (Oki Electric Industry Co., Ltd.), 24 September, 1999 (24.09.99), | 7,8 |
| A | page 3, column 4, line 13 to page 4, column 5, line 17 (Family: none) | 1-6,9,10 |
| X | JP, 10-200448, A (Yozan K.K.), 31 July, 1998 (31.07.98), Full text; all drawings | 7,8 |
| A | & EP, 853388, A2    & KR, 98070420, A & US, 6081549, A | 1-6,9,10 |
| X | JP, 11-8568, A (Yozan K.K.), 12 January, 1999 (12.01.99), Full text; all drawings | 7,8 |
| A | & EP, 886385, A2    & KR, 99007063, A & CN, 1209697, A | 1-6,9,10 |
| X | JP, 10-336073, A (Yozan K.K.), 18 December, 1998 (18.12.98), Full text; all drawings | 7,8 |
| A | & EP, 881780, A2    & KR, 98087397, A & CN, 1201309, A | 1-6,9,10 |

☐ Further documents are listed in the continuation of Box C.    ☐ See patent family annex.

| | | |
|---|---|---|
| *   Special categories of cited documents: | "T" | later document published after the international filing date or priority date and not in conflict with the application but cited to understand the principle or theory underlying the invention |
| "A"  document defining the general state of the art which is not considered to be of particular relevance | | |
| "E"  earlier document but published on or after the international filing date | "X" | document of particular relevance; the claimed invention cannot be considered novel or cannot be considered to involve an inventive step when the document is taken alone |
| "L"  document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"  document referring to an oral disclosure, use, exhibition or other means | | |
| "P"  document published prior to the international filing date but later than the priority date claimed | "&" | document member of the same patent family |

| Date of the actual completion of the international search | Date of mailing of the international search report |
|---|---|
| 15 June, 2001 (15.06.01) | 26 June, 2001 (26.06.01) |

| Name and mailing address of the ISA/ Japanese Patent Office | Authorized officer |
|---|---|
| Facsimile No. | Telephone No. |

Form PCT/ISA/210 (second sheet) (July 1992)